# EUROPÄISCHE PATENTSCHRIFT

(11) **EP 1 871 695 B1**
(45) Veröffentlichungstag und Bekanntmachung des Hinweises auf die Patenterteilung: **13.05.2009**
(21) Anmeldenummer: 06725002.7
(22) Anmeldetag: 09.03.2006
(51) Int. Cl.: B65G 47/71

(54) **VERTEILEINRICHTUNG FÜR OBJEKTE, VERPACKUNGSVORRICHTUNG SOWIE VERFAHREN ZUR VERTEILUNG VON OBJEKTEN**
OBJECT DISTRIBUTION DEVICE, PACKAGING DEVICE AND OBJECT DISTRIBUTION PROCESS
DISPOSITIF DE DISTRIBUTION, DISPOSITIF D'EMBALLAGE ET PROCEDE DE DISTRIBUTION D'OBJETS

(30) Priorität: 11.03.2005 DE 102005011743
(43) Veröffentlichungstag der Anmeldung: 02.01.2008
(73) Patentinhaber: GRUENENTHAL GMBH, 52078 Aachen (DE); Harro Höfliger Verpackungsmaschinen GmbH, 71573 Allmersbach im Tal (DE)
(72) Erfinder: SCHATEIKIS, Dieter, 52223 Stolberg (DE); REISER, Manfred, 71364 Winnenden (DE)
(74) Vertreter: Wolff, Felix
(86) Internationale Anmeldenummer: PCT/EP2006/060594
(87) Internationale Veröffentlichungsnummer: WO 2006/095008

(56) Entgegenhaltungen:
- EP-A- 1 291 305
- BE-A2- 860 832
- DE-A1- 10 163 424

## Beschreibung

Die Erfindung betrifft eine Verteileinrichtung für Objekte, von einer die Objekte während eines Abgabetaktes in Gruppen von m Objekten abgebenden Abgabevorrichtung, an eine erste annehmende Annahmevorrichtung und eine zweite annehmende Annahmevorrichtung.

Bei der Herstellung von pharmazeutischen Produkten ist es erforderlich, mit geringem Aufwand unterschiedliche Packungsgrößen herstellen zu können. Dies trifft insbesondere für solche pharmazeutischen Produkte zu, bei denen Einzeldosen eines Arzneimittels, beispielsweise mit oder in einem Trinkhalm verpackt werden müssen. Hiezu ist es erforderlich, dass die gesamte Verpackungsanordnung leicht und einfach auf die Herstellung von verschiedenen Packungsgrößen einrichtbar ist, d.h. der Umstellungsaufwand gering ist.

Verteilervorrichtungen für Produkte sind allgemein bekannt. In der Regel ist hierbei eine Zuführeinrichtung, beispielsweise ein Zuführband (als Endlosband) und eine Abführeinrichtung, beispielsweise ein Abführband (als Endlosband) vorgesehen, wobei zwischen dem Zuführband und dem Abführband ein Verteilerband angeordnet ist, das beispielsweise quer zur Förderrichtung verschiebbar ist. Beispielsweise ist aus der Druckschrift DE 101 63 424 A1 ein Fördersystem zum Positionieren von Produkten wie Lebensmittelscheiben oder dergleichen bekannt.

Bei bekannten Verteilervorrichtungen ist es nachteilig, dass entsprechende Verpackungsmaschinen nicht die erforderliche Flexibilität zur leichten und einfachen Herstellung unterschiedlich großer Kartons bzw. unterschiedlich großer Einheiten verpackter pharmazeutischer Produkte aufweisen oder aber, dass der Aufwand zur Umrüstung von einer Packungsgröße zu einer andern Packungsgröße relativ hoch ist.

Der Erfindung liegt daher die Aufgabe zu Grunde, eine Verteileinrichtung für Objekte bereitzustellen, die die Nachteile der bekannten Verteilervorrichtungen vermeidet und dabei kostengünstig bereitstellbar ist sowie einen geringen Raumbedarf aufweist.

Diese Aufgabe wird erfindungsgemäß durch eine Verteileinrichtung für Objekte von einer die Objekte während eines Abgabetaktes in Gruppen von m Objekten abgebenden Abgabevorrichtung an eine erste annehmende Annahmevorrichtung und eine zweite annehmende Annahmevorrichtung gelöst, wobei die Annahmevorrichtungen die Gruppe von m Objekten während eines Annahmentaktes gemeinsam annehmen, wobei mittels einer Übergabeeinrichtung zwischen verschiedenen Annahmetakten eine veränderbare Aufteilung der m Objekte einer Gruppe, in eine erste Anzahl m₁, an die erste Annahmevorrichtung abgegebener Objekte und eine zweite Anzahl m₂, an die zweite Annahmevorrichtung abgegebener Objekte, vorgesehen ist. Hierdurch ist es erfindungsgemäß vorteilhaft möglich, sukzessive verschiedene Kartongrößen mit unterschiedlicher Anzahlen von Objekten herzustellen, wobei die Kartongröße bzw. generell die Verpackungsgröße mit geringstmöglichem Aufwand und sehr kurzen Umstellungszeiten veränderbar ist. Hierdurch ist es erfindungsgemäß beispielsweise möglich, mit geringem Umstellungsaufwand sowohl krankenhausgerechte Packungsgrößen von pharmazeutischen Produkten und zur Abgabe an Endverbraucher vorgesehene Packungsgrößen ohne oder mit sehr geringem Umrüstaufwand und weitgehend ohne Umrüstkosten bzw. Umrüstverzögerung nacheinander herzustellen.

Bevorzugt ist ferner, dass jede der Annahmevorrichtungen während eines aus N Annahmetakten bestehenden Annahmezyklus jeweils Pakete von p Objekten bildet, wobei die Anzahl der gebildeten Pakete dem Produkt aus der Anzahl der Annahmevorrichtungen und der Anzahl m von Objekten in einer Gruppe entspricht. Es ist ebenfalls bevorzugt, dass die Anzahl N der Annahmetakte eines Annahmezyklus dem Produkt aus der Anzahl der Annahmevorrichtungen und der Anzahl p der Objekte in einem Paket entspricht. Hierdurch ist es mit einfachen Mitteln möglich, trotz der Abgabe einer jeweils unterschiedlichen Anzahl von Objekten während eines Annahmetaktes an die erste bzw. zweite Annahmevorrichtung, nach einem kompletten Annahmezyklus eine gewisse Anzahl von Paketen einer einheitlichen Größe zu bilden und gegebenenfalls anschließend eine Änderung der Paketgröße vorzunehmen.

Es ist ferner bevorzugt, dass sich während eines identischen Annahmetaktes die erste Anzahl m₁ der an die erste Annahmevorrichtung abgegebenen Objekte und die zweite Anzahl m₂ der an die zweite Annahmevorrichtung abgegebenen Objekte um höchstens 1 bis 3 bevorzugt, um höchstens 1 unterscheidet. Hierdurch wird in vorteilhafter Weise ermöglicht, dass die einzelnen Objekte, während der Verteilung auf die erste bzw. zweite Annahmevorrichtung, nur sehr geringen Beschleunigungskräften ausgesetzt werden. Weiterhin wird hiermit in vorteilhafter Weise ermöglicht, dass die Verteileinrichtung besonders platzsparend ausgebildet sein kann. Je größer die Differenz der ersten und der zweiten Anzahl m₁, m₂ sein darf, desto größer ist die Variationsmöglichkeit an unterschiedlichen Kartongrößen bzw. Packungsgrößen die mittels der Verteileinrichtung erfindungsgemäß erzeugbar sind.

Erfindungsgemäß ist ferner bevorzugt, dass die Verteileinrichtung eine Übergabeeinrichtung aufweist, durch die eine Bewegung der Objekte sowohl entlang einer Transportrichtung von der Abgabevorrichtung zu den Annahmevorrichtungen, als auch entlang einer im Wesentlichen quer zur Transportrichtung verlaufenden Verteilrichtung folgt. Erfindungsgemäß ist es hierdurch möglich, dass die Objekte keinen unnötigen Beschleunigungskräften, beispielsweise zur Ausführung einer Drehung oder dergleichen unterworfen werden müssen.

Weiterhin ist es erfindungsgemäß bevorzugt, dass die Anzahl p der Objekte eines Paketes einer Zahl von fünf bis fünfzig, bevorzugt zwölf, vierzehn, sechzehn oder achtzehn, entspricht. Hierdurch ist es erfindungsgemäß auf einfache Weise möglich, übliche Packungsgrößen, wie beispielsweise kleine Packungsgrößen zur Abgabe an Endverbraucher oder größere Packungsgrößen, wie beispielsweise Krankenhaus Packungsgrößen, herzustellen.

Ein weiterer Gegenstand der vorliegenden Erfindung ist eine Verpackungsvorrichtung zur Bildung von Objektverpackungen mit einer erfindungsgemäßen Verteileinrichtung, wobei die Anzahl p der Objekte eines Pakets der Anzahl der Objekte einer Objektverpackung entspricht. Eine solche Verpackungsvorrichtung umfasst beispielsweise eine erste Einrichtung, die jedes pharmazeutische Produkt einzeln verpackt und die so verpackten pharmazeutischen Produkte jeweils als Objekte an eine Übergabestelle als Abgabevorrichtung transportiert, und weiterhin eine zweite Einrichtung, welche Pakete von solcherlei Objekten versandfertig in Karton- bzw. Verpackungseinheiten abpackt, wobei die erfindungsgemäße Verteileinrichtung zwischen der ersten und der zweiten Einrichtung angeordnet ist und die Objekte von einer der ersten Einrichtung als Abgabevorrichtung zugeordneten Schnittstelle an die der zweiten Einrichtung ebenfalls als Schnittstellen zugeordneten Annahmevorrichtungen überträgt. Erfindungsgemäß ist es hierbei unerheblich, von welcher Art die erste Einrichtung bzw. von welcher Art die zweite Einrichtung ist. Maßgebend ist, dass die erste Einrichtung eine Abgabevorrichtung als Übergabeschnittstelle und die zweite Einrichtung eine erste und eine zweite Annahmevorrichtung ebenfalls als Schnittstellen aufweisen.

Ein weiterer Gegenstand der vorliegenden Erfindung ist ein Verfahren zur Verteilung von Objekten von einer die Objekte während eines Abgabetaktes in Gruppen von m abgebenden Abgabevorrichtung an eine erste annehmende Annahmevorrichtung und eine zweite annehmende Annahmevorrichtung, wobei die Annahmevorrichtungen die Gruppe von m Objekten während eines Annahmetaktes gemeinsam annehmen und wobei zwischen verschiedenen Annahmetakten die m Objekte einer Gruppe veränderbar in eine erste Anzahl m₁ an die erste Annahmevorrichtung abgegebener Objekte und eine zweite Anzahl m₂ an die zweite Annahmevorrichtung abgegebener Objekte, aufgeteilt wird. Ein solches Verfahren hat den Vorteil, dass mit einfachen Mitteln eine sehr variable und leicht umrüstbare Paketbildung der Objekte durch die Annahmevorrichtung bewerkstelligt werden kann.

Es ist ferner bevorzugt, dass während eines aus N Annahmetakten bestehenden Annahmezyklus jeweils Pakete von p Objekten gebildet werden, wobei die Anzahl der gebildeten Pakete dem Produkt aus der Anzahl der Annahmevorrichtungen und der Anzahl m der Objekte in einer Gruppe entspricht. Ebenfalls ist bevorzugt, dass die Anzahl N der Annahmetakte eines Annahmezyklus dem Produkt aus der Anzahl der Annahmevorrichtungen und der Anzahl p der Objekte in einem Paket entspricht. Hierdurch ist es erfindungsgemäß vorteilhaft möglich, dass nach einem Abschluss eines derartigen Annahmezyklus eine Paketbildung mit einer veränderten Anzahl von Objekten in einem Paket möglich ist, was erfindungsgemäß mit sehr wenig Aufwand realisierbar ist.

Bevorzugt ist erfindungsgemäß ferner, dass sich während eines identischen Annahmetaktes die erste Anzahl m₁ der an die erste Annahmevorrichtung abgegebenen Objekte und die zweite Anzahl m₂ der an die zweite Annahmevorrichtung abgegebenen Objekte, um höchstens eins bis drei, bevorzugt um höchstens 1, unterscheidet. Es ist hierdurch eine platzsparende und damit auch kostengünstige Aufstellung bzw. Realisierung einer erfindungsgemäßen Verteilvorrichtung möglich.

Weiterhin ist bevorzugt, dass die Anzahl p der Objekte eines Pakets einer Zahl von fünf bis fünfzig, bevorzugt zwölf, vierzehn, sechzehn oder achtzehn, entspricht. Hierdurch ist eine sehr flexible Herstellung von Verpackungen mittels des erfindungsgemäßen Verfahrens möglich.

Ferner ist bevorzugt, dass die Anzahl m der Objekte einer Gruppe einer Zahl von zwei bis zwanzig, bevorzugt fünf, sechs, acht oder zehn, entspricht. Es ist hierdurch möglich, das erfindungsgemäße Verfahren bei einer Vielzahl von Verteilverfahren, insbesondere zum Abpacken von Objekten in unterschiedliche Verteileinheiten, einzusetzen.

Die Erfindung wird nachfolgend anhand von in der Zeichnung dargestellten Ausführungsbeispielen näher erläutert. Es zeigen
**Figur 1** eine Prinzipsskizze einer erfindungsgemäßen Teileinrichtung.
**Figur 2** eine Prinzipsskizze zur Verdeutlichung der Arbeitsweise der erfindungsgemäßen Verteileinrichtung bzw. zur Verdeutlichung des erfindungsgemäßen Verfahrens.
**Figuren 3, 4** jeweils unterschiedliche Ausführungsbeispiele der Arbeitsweise einer erfindungsgemäßen Verteileinrichtung bzw. der Durchführung des erfindungsgemäßen Verfahrens.

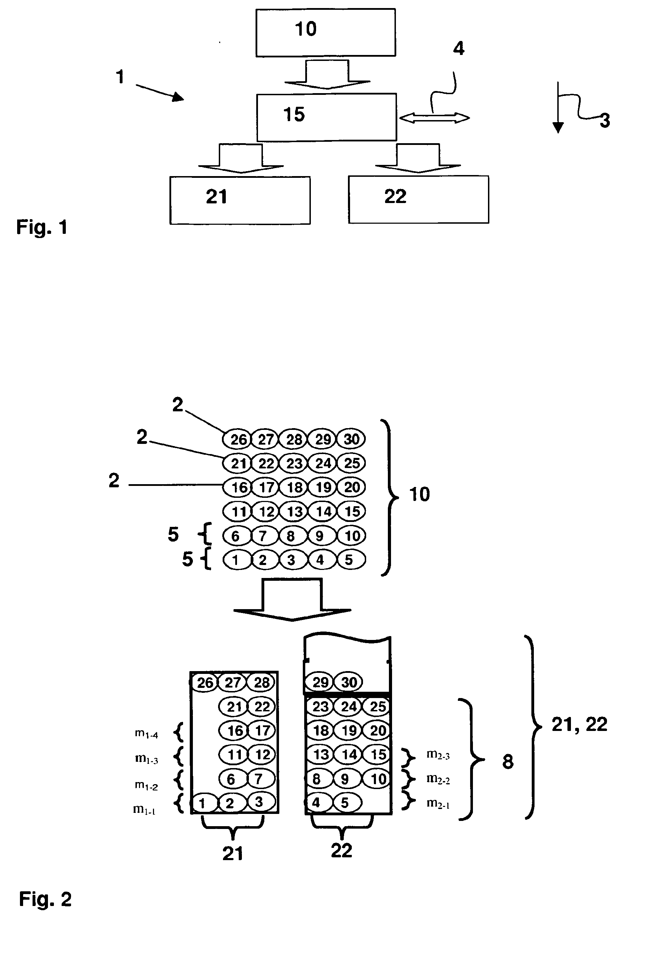

In **Figur 1** ist schematisch eine erfindungsgemäße Verteileinrichtung 1 dargestellt. Die Verteileinrichtung 1 umfasst eine Übergabeeinrichtung 15, welche in Figur 1 nicht dargestellte Objekte von einer Abgabevorrichtung 10 zu einer ersten Annahmevorrichtung 21 bzw. einer zweiten Annahmevorrichtung 22 in einer Transportrichtung 3 der Objekte zu bewegen im Stande ist, wobei die Übergabeeinrichtung 15 bei der Verteilung der Objekte auf die erste oder zweite Annahmevorrichtung 21, 22 - beispielhaft in **Figur 1** dargestellt - eine Bewegung ausführt, die in einer Verteilrichtung 4 erfolgt, welche im Wesentlichen quer zur Transportrichtung 3 verläuft. Im Allgemeinen ist die erfindungsgemäße Verteileinrichtung 1 Teil einer größeren, im Ganzen jedoch nicht dargestellten Verpackungsvorrichtung, die eine nicht dargestellte erste Einrichtung und eine nicht dargestellte zweite Einrichtung aufweist, wobei die Abgabevorrichtung 10 die Schnittstelle von der ersten Einrichtung der Verpackungsvorrichtung zur Verteileinrichtung 1 bildet und wobei die erste und zweite Annahmevorrichtung 21, 22 die Schnittstelle der zweiten Einrichtung der Verpackungsvorrichtung ebenfalls zur erfindungsgemäßen Verteileinrichtung 1 darstellt.

In **Figur 2** ist die Arbeitsweise der erfindungsgemäßen Verteileinrichtung 1 bzw. das erfindungsgemäße Verfahren zur Verteilung von Objekten dargestellt. Im oberen Teil der **Figur 2** ist eine Darstellung einer Mehrzahl von Objekten 2 dargestellt, wie sie an der Abgabevorrichtung 10 zur Übergabe an die Annahmevorrichtungen 21, 22 zur Verfügung gestellt werden. Die in der **Figur 2** dargestellten Objekte 2 sind von 1-30 durchnummeriert, um die zeitliche Abfolge der Funktionsweise der Verteileinrichtung bzw. die zeitliche Abfolge der Durchführung des erfindungsgemäßen Verfahrens besser darstellen zu können. Die Objekte 2 werden an der Abgabevorrichtung 10 jeweils taktweise in bestimmten Gruppen 5 angeliefert bzw. stehen dort zur Abgabe an die Annahmevorrichtungen 21, 22 zur Verfügung. Jede solche Gruppe 5 von Objekten 2 umfasst eine bestimmte Anzahl m von Objekten 2. Beispielhaft umfasst eine Gruppe 5 genau fünf Objekte 2. Es ist aber erfindungsgemäß vorgesehen, dass eine Gruppe 5 von Objekten 2 auch Anzahlen von zwei bis etwa zwanzig Objekten 2 umfassen kann, wobei eine Anzahl von fünf, sechs, acht oder zehn Objekten 2 innerhalb einer Gruppe 5 bevorzugt ist. Im unteren Teil der **Figur 2** ist die Annahme bzw. die Aufteilung der Objekte 2 auf die erste bzw. zweite Annahmevorrichtung 21, 22 dargestellt. Durch die Durchnummerierung der Objekte 2 wird deutlich, dass in unterschiedlichen Annahmetakten eine unterschiedliche Aufteilung der im Beispiel fünf Objekte 2 einer Gruppe (m=5) vorgenommen wird. Dies erklärt sich folgendermaßen:

Während eines ersten Annahmetaktes werden die mit den Zahlen 1-5 durchnummerierten Objekte 2 von den Annahmevorrichtungen 21, 22 angenommen. Während eines zweiten Annahmetaktes werden die mit den Ziffern 6-10 durchnummerierten Objekte 2 von den Annahmevorrichtungen 21, 22 angenommen. Während eine sechsten Annahmetaktes werden die mit den Ziffern 26-30 durchnummerierten Objekte 2 von den Annahmevorrichtungen 21, 22 angenommen. Falls die Anzahl m von Objekten 2 innerhalb einer Gruppe 5 größer oder kleiner als fünf ist würden sich selbstverständlich die Anzahlen der durchnummerierten Objekte 2 ändern. Es ist nun so, dass von der ersten Annahmevorrichtung 21 im ersten Annahmetakt drei Objekte 2 angenommen werden, im zweiten bis fünften Annahmetakt jeweils zwei Objekte 2 angenommen werden und im sechsten Annahmetakt wiederum drei Objekte 2 angenommen werden. Von der zweiten Annahmevorrichtung 22 werden im ersten Annahmetakt zwei Objekte 2 angenommen, im zweiten bis fünften Annahmetakt jeweils drei Objekte 2 und im sechsten Annahmetakt wiederum zwei Objekte 2 angenommen. Für jeden Annahmetakt gibt es somit eine erste Anzahl m₁ von Objekten 2, die von der ersten Annahmevorrichtung 21 angenommen werden und eine zweite Anzahl m₂ von Objekten 2 die von der zweiten Annahmevorrichtung 22 angenommen werden. Für jeden Annahmetakt gilt, dass die Summe der ersten Anzahl m₁ und der zweiten Anzahl m₂ die Anzahl m der Objekte 2 innerhalb einer Gruppe 5 ergibt, sprich in jedem Annahmetakt werden alle Objekte 2 einer Gruppe 5, die von der Abgabevorrichtung 10 zur Verfügung gestellt werden auf die Annahmevorrichtungen 21, 22 vollständig verteilt. Zur besseren Verdeutlichung des Ablaufs des erfindungsgemäßen Verfahrens ist in **Figur 2** die erste Anzahl für den ersten Annahmetakt m₁₋₁, für den zweiten Annahmetakt m₁₋₂ und sofort bezeichnet. Die erste Anzahl m₁₋₆ entspricht der an die erste Annahmevorrichtung 21 abgegebenen Objekte 2 im sechsten Annahmetakt. Entsprechend ist die zweite Anzahl m₂ für die jeweiligen Annahmetakte definiert, also m₂₋₁ für den ersten Annahmetakt, m₂₋₂ für den zweiten Annahmetakt und so fort.

Aus der **Figur 2** wird weiterhin deutlich, dass nach einer festen Anzahl von abgegebenen Objekte eine Paketbildung derart erfolgt, dass eine eingestellte Anzahl von Objekten 2 zu einem Paket 8 zusammengefasst werden. Im Beispiel der Figur 2 sind dies vierzehn Objekte 2 innerhalb eines Paketes 8. Die Anzahl von Objekten 2 innerhalb eines Paketes 8 wird im Folgenden auch mit dem Buchstaben p bezeichnet. Die erste Anzahl m₁ kann sich von der zweiten Anzahl m₂ für jeden Annahmetakt unterscheiden - im Beispiel jeweils höchstens um eins: die Gruppe 5 von fünf Objekten 2 wird aufgeteilt in die erste Anzahl m₁ von zwei bzw. drei Objekten 2 und in die zweite Anzahl m₂ von drei bzw. zwei Objekten 2. Es ist erfindungsgemäß auch möglich, dass sich die erste und zweite Anzahl m₁, m₂ stärker voneinander unterscheiden können, beispielsweise um zwei (falls es sich bei m um eine gerade Zahl handelt) oder drei, so dass auch eine Aufteilung von 4:1 bzw. 1:4 (bei einer Anzahl von fünf Objekten 2 innerhalb einer Gruppe 5) möglich ist. Hierdurch ergeben sich größere Variationsmöglichkeiten bei der Paketbildung. Es ergibt sich allerdings auch der Nachteil, dass eine stärkere, seitliche Bewegung, d.h. in der Regel in der Verteilrichtung 4 der Übergabeeinrichtung 15 erforderlich ist, was den Platzbedarf erhöht und bei sonst gleichen Bedingungen (insbesondere gleichen Taktzeiten) die Beschleunigungskräfte auf die Objekte 2 bei der Verteilung auf die erste bzw. die zweite Annahmevorrichtung 21, 22 erhöht.

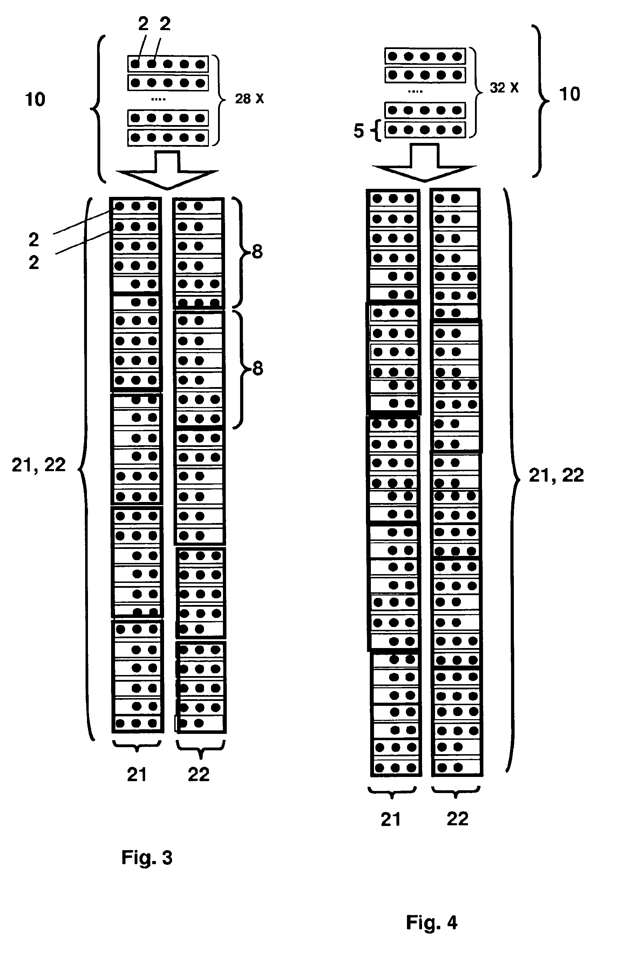

In **Figur 3** und **4** ist beispielhaft die Arbeitweise der erfindungsgemäßen Verteileinrichtung 1 bzw. das erfindungsgemäße Verfahren zur Verteilung von Objekten 2 anhand eines kompletten Annahmezyklus dargestellt. Der Einfachheit halber sind die Objekte 2 in **Figur 3** und **4** nicht mehr einzeln durchnummeriert sondern lediglich als ausgefüllte Kreise dargestellt.

In **Figur 3** ist beispielhaft das erfindungsgemäße Verfahren zu Bildung von Paketen 8 mit jeweils vierzehn Objekten 2 (d.h. p=14) dargestellt. Bei einer Anzahl von m=5 Objekten 2 innerhalb einer Gruppe 5 ergibt sich dadurch eine Zykluslänge N des Annahmezyklus von 28 Abgabetakte bzw. Annahmetakte der Verteileinrichtung 1. Die Paketbildung erfolgt derart, dass nach einem bestimmten Annahmetakt, beispielsweise dem fünften Annahmetakt ein Paket 8 an der zweiten Annahmevorrichtung 22 bereits vollständig ist, während es zur Vervollständigung des Paketes 8 an der ersten Annahmevorrichtung 21 noch des sechsten Annahmetaktes bedarf, vergleiche auch die Figur 2.

In **Figur 4** ist der aus N=32 Annahmetakten bestehende Annahmezyklus von Paketen zu je p=16 Objekten 2 dargestellt. Für das Beispiel von fünf Objekten 2 innerhalb einer Gruppe 5 und einer maximalen Differenz der ersten Anzahl m₁ von der zweiten Anzahl m₂ von eins ist es möglich, verschiedene Paketgrößen zu bilden, beispielsweise zehn, zwölf, vierzehn, sechzehn. Manche andere Paketgrößen hingegen sind bei dieser Grundfiguration nicht möglich, beispielsweise eine Paketgröße von dreizehn. Jedoch ist eine Paketgröße von dreizehn dann möglich, wenn eine größere Variabilität der ersten von der zweiten Anzahl m₁, m₂ zugelassen wird, beispielweise eine Differenz von drei Objekten 2.

### Bezugszeichenliste

- 1: Verteileinrichtung
- 2: Objekte
- 3: Transportrichtung
- 4: Verteilrichtung
- 5: Gruppe
- 8: Paket
- 10: Abgabevorrichtung
- 15: Übergabeeinrichtung
- 21: erste Annahmevorrichtung
- 22: zweite Annahmevorrichtung
- m: Anzahl von Objekten in einer Gruppe
- p: Anzahl von Objekten in einem Paket
- m₁: erste Anzahl
- m₂: zweite Anzahl
- N: Anzahl der Annahmetakte eines Annahmezyklus

## Patentansprüche

1. Verteileinrichtung (1) für Objekte (2) von einer die Objekte (2) während eines Abgabetaktes in Gruppen (5) von m Objekten (2) abgebenden Abgabevorrichtung (10) an eine erste annehmende Annahmevorrichtung (21) und eine zweite annehmende Annahmevorrichtung (22), **dadurch gekennzeichnet, dass** die Annahmevorrichtungen (21, 22) die Gruppe (5) von m Objekten (2) während eines Annahmetaktes gemeinsam annehmen, wobei mittels einer Übergabeeinrichtung (15) zwischen verschiedenen Annahmetakten eine veränderbare Aufteilung der m Objekte (2) einer Gruppe (5) in eine erste Anzahl m₁ an die erste Annahmevorrichtung (21) abgegebener Objekte (2) und eine zweite Anzahl m₂ an die zweite Annahmevorrichtung (22) abgegebener Objekte (2) vorgesehen ist.

2. Verteileinrichtung (1) nach Anspruch 1, **dadurch gekennzeichnet, dass** jede der Annahmevorrichtungen (21, 22) während eines aus N Annahmetakten bestehenden Annahmezyklus jeweils Pakete (8) von p Objekten (2) bildet, wobei die Anzahl der gebildeten Pakete (8) dem Produkt aus der Anzahl der Annahmevorrichtungen (21, 22) und der Anzahl m von Objekten (2) in einer Gruppe (5) entspricht.

3. Verteileinrichtung (1) nach einem der vorhergehenden Ansprüche, **dadurch gekennzeichnet, dass** die Anzahl N der Annahmetakte eines Annahmezyklus dem Produkt aus der Anzahl der Annahmevorrichtungen (21, 22) und der Anzahl p der Objekte (2) in einem Paket (8) entspricht.

4. Verteileinrichtung (1) nach einem der vorhergehenden Ansprüche, **dadurch gekennzeichnet, dass** sich während eines identischen Annahmetakts die erste Anzahl m₁ der an die erste Annahmevorrichtung (21) abgegebenen Objekte (2) und die zweite Anzahl m₂ der an die zweite Annahmevorrichtung (22) abgegebenen Objekte (2) um höchstens eins bis drei, bevorzugt um höchstens eins, unterscheidet.

5. Verteileinrichtung (1) nach einem der vorhergehenden Ansprüche, **dadurch gekennzeichnet, dass** die Verteileinrichtung (1) die Übergabeeinrichtung (15) aufweist, durch die eine Bewegung der Objekte (2) sowohl entlang einer Transportrichtung (3) von der Abgabevorrichtung (10) zu den Annahmevorrichtungen (21, 22) als auch entlang einer im wesentlichen quer zur Transportrichtung (3) verlaufenden Verteilrichtung (4) erfolgt.

6. Verteileinrichtung (1) nach einem der vorhergehenden Ansprüche, **dadurch gekennzeichnet, dass** die Anzahl p der Objekte (2) eines Pakets (8) einer Zahl von fünf bis fünfzig, bevorzugt zwölf, vierzehn, sechzehn oder achtzehn, entspricht.

7. Verteileinrichtung (1) nach einem der vorhergehenden Ansprüche, **dadurch gekennzeichnet, dass** die Anzahl m der Objekte (2) einer Gruppe (5) einer Zahl von zwei bis zwanzig, bevorzugt fünf, sechs, acht oder zehn, entspricht.

8. Verpackungsvorrichtung zur Bildung von Objektverpackungen mit einer Verteileinrichtung (1) nach einem der vorhergehenden Ansprüche, wobei die Anzahl p der Objekte (2) eines Pakets (8) der Anzahl der Objekte (2) einer Objektverpackung entspricht.

9. Verfahren zur Verteilung von Objekten (2) von einer die Objekte (2) während eines Abgabetaktes in Gruppen (5) von m Objekten (2) abgebenden Abgabevorrichtung (10) an eine erste annehmende Annahmevorrichtung (21) und eine zweite annehmende Annahmevorrichtung (22), **dadurch gekennzeichnet, dass** die Annahmevorrichtungen (21, 22) die Gruppe (5) von m Objekten (2) während eines Annahmetaktes gemeinsam annehmen und dass zwischen verschiedenen Annahmetakten die m Objekte (2) einer Gruppe (5) veränderbar in eine erste Anzahl m₁ an die erste Annahmevorrichtung (21) abgegebener Objekte (2) und eine zweite Anzahl m₂ an die zweite Annahmevorrichtung (22) abgegebener Objekte (2), aufgeteilt wird.

10. Verfahren nach Anspruch 9, **dadurch gekennzeichnet, dass** während eines aus N Annahmetakten bestehenden Annahmezyklus jeweils Pakete (8) von p Objekten (2) gebildet werden, wobei die Anzahl der gebildeten Pakete (8) dem Produkt aus der Anzahl der Annahmevorrichtungen (21, 22) und der Anzahl m der Objekte (2) in einer Gruppe (5) entspricht.

11. Verfahren nach einem der Ansprüche 9 oder 10, **dadurch gekennzeichnet, dass** die Anzahl N der Annahmetakte eines Annahmezyklus dem Produkt aus der Anzahl der Annahmevorrichtungen (21, 22) und der Anzahl p der Objekte (2) in einem Paket (8) entspricht.

12. Verfahren nach einem der Ansprüche 9 bis 11, **dadurch gekennzeichnet, dass** sich während eines identischen Annahmetakts die erste Anzahl m₁ der an die erste Annahmevorrichtung (21) abgegebenen Objekte (2) und die zweite Anzahl m₂ der an die zweite Annahmevorrichtung (22) abgegebenen Objekte (2) um höchstens eins bis drei, bevorzugt um höchstens eins, unterscheidet.

13. Verfahren nach einem der Ansprüche 9 bis 12, **dadurch gekennzeichnet, dass** die Anzahl p der Objekte (2) eines Pakets (8) einer Zahl von fünf bis fünfzig, bevorzugt zwölf, vierzehn, sechzehn oder achtzehn, entspricht.

14. Verfahren nach einem der Ansprüche 9 bis 13, **dadurch gekennzeichnet, dass** die Anzahl m der Objekte (2) einer Gruppe (5) einer Zahl von zwei bis zwanzig, bevorzugt fünf, sechs, acht oder zehn, entspricht.

## Claims

1. A distribution apparatus (1) for objects (2) from a delivery apparatus (10) which delivers the objects (2) during a delivery phase in groups (5) of m objects (2) to a first receiving receiving apparatus (21) and a second receiving receiving apparatus (22), **characterised in that** the receiving apparatuses (21, 22) jointly receive the group (5) of m objects (2) during one receiving phase, wherein, between different receiving phases, a transfer apparatus (15) provides a variable division of the m objects (2) in a group (5) into a first number m₁ of objects (2) delivered to the first receiving apparatus (21) and a second number m₂ of objects (2) delivered to the second receiving apparatus (22).

2. A distribution apparatus (1) according to claim 1, **characterised in that,** during a receiving cycle consisting of N receiving phases, each of the receiving apparatuses (21, 22) in each case forms packets (8) of p objects (2), wherein the number of packets (8) formed corresponds to the product of the number of receiving apparatuses (21, 22) and the number m of objects (2) in a group (5).

3. A distribution apparatus (1) according to either of the preceding claims, **characterised in that** the number N of receiving phases of a receiving cycle corresponds to the product of the number of receiving apparatuses (21, 22) and the number p of objects (2) in a packet (8).

4. A distribution apparatus (1) according to any one of the preceding claims, **characterised in that,** during one and the same receiving phase, the first number m₁ of objects (2) delivered to the first receiving apparatus (21) and the second number m₂ of objects (2) delivered to the second receiving apparatus (22) differs by at most one to three, preferably by at most one.

5. A distribution apparatus (1) according to any one of the preceding claims, **characterised in that** the distribution apparatus (1) comprises the transfer apparatus (15), by means of which movement of the objects (2) is effected both along a conveying direction (3) from the delivery apparatus (10) to the receiving apparatuses (21, 22) and along a distribution direction (4) extending substantially transversely of the conveying direction (3).

6. A distribution apparatus (1) according to any one of the preceding claims, **characterised in that** the number p of objects (2) in a packet (8) corresponds to a number from five to fifty, preferably twelve, fourteen, sixteen or eighteen.

7. A distribution apparatus (1) according to any one of the preceding claims, **characterised in that** the number m of objects (2) in a group (5) corresponds to a number from two to twenty, preferably five, six, eight or ten.

8. A packaging apparatus for forming packages of objects with a distribution apparatus (1) according to any one of the preceding claims, wherein the number p of objects (2) in a packet (8) corresponds to the number of objects (2) in a package of objects.

9. A method for distributing objects (2) from a delivery apparatus (10) which delivers the objects (2) during a delivery phase in groups (5) of m objects (2) to a first receiving receiving apparatus (21) and a second receiving receiving apparatus (22), **characterised in that** the receiving apparatuses (21, 22) jointly receive the group (5) of m objects (2) during one receiving phase and **in that**, between different receiving phases, the m objects (2) in a group (5) are variably divided into a first number m₁ of objects (2) delivered to the first receiving apparatus (21) and a second number m₂ of objects (2) delivered to the second receiving apparatus (22).

10. A method according to claim 9, **characterised in that,** during a receiving cycle consisting of N receiving phases, in each case packets (8) of p objects (2) are formed, wherein the number of packets (8) formed corresponds to the product of the number of receiving apparatuses (21, 22) and the number m of objects (2) in a group (5).

11. A method according to either of claims 9 or 10, **characterised in that** the number N of receiving phases of a receiving cycle corresponds to the product of the number of receiving apparatuses (21, 22) and the number p of objects (2) in a packet (8).

12. A method according to any one of claims 9 to 11, **characterised in that,** during one and the same receiving phase, the first number m₁ of objects (2) delivered to the first receiving apparatus (21) and the second number m₂ of objects (2) delivered to the second receiving apparatus (22) differs by at most one to three, preferably by at most one.

13. A method according to any one of claims 9 to 12, **characterised in that** the number p of objects (2) in a packet (8) corresponds to a number from five to fifty, preferably twelve, fourteen, sixteen or eighteen.

14. A method according to any one of claims 9 to 13, **characterised in that** the number m of objects (2) in a group (5) corresponds to a number from two to twenty, preferably five, six, eight or ten.

## Revendications

1. Dispositif de distribution (1) pour objets (2) depuis un dispositif de décharge (10) déchargeant les objets (2) pendant un temps de déchargement par groupes (5) de m objets (2), à un premier dispositif de prélèvement (21) et à un deuxième dispositif de prélèvement (22), **caractérisé en ce que** les dispositifs de prélèvement (21, 22) prélèvent les groupes (5) de m objets (2) en commun pendant un temps de prélèvement, une division variable des m objets (2) d'un groupe (5) en un premier nombre m₁ d'objets (2) déchargés au premier dispositif de prélèvement (21) et en un deuxième nombre m₂ d'objets déchargés (2) au deuxième dispositif de prélèvement (22) étant prévue au moyen d'un dispositif de transfert (15) entre différents temps de prélèvement.

2. Dispositif de distribution (1) selon la revendication 1, **caractérisé en ce que** chacun des dispositifs de prélèvement (21, 22) forme pendant un cycle de prélèvement constitué de N temps de prélèvement, à chaque fois des paquets (8) de p objets (2), le nombre des paquets formés (8) correspondant au produit du nombre des dispositifs de prélèvement (21, 22) par le nombre m d'objets (2) dans un groupe (5).

3. Dispositif de distribution (1) selon l'une quelconque des revendications précédentes, **caractérisé en ce que** le nombre N des temps de prélèvement d'un cycle de prélèvement correspond au produit du nombre des dispositifs de prélèvement (21, 22) par le nombre p des objets (2) dans un paquet (8).

4. Dispositif de distribution (1) selon l'une quelconque des revendications précédentes, **caractérisé en ce que** le premier nombre m₁ des objets (2) déchargés au niveau du premier dispositif de prélèvement (21) et le deuxième nombre m₂ des objets (2) déchargés au niveau du deuxième dispositif de prélèvement (22), pendant un temps de prélèvement identique, sont différents d'un nombre maximum de 1 à 3, de préférence de un au maximum.

5. Dispositif de distribution (1) selon l'une quelconque des revendications précédentes, **caractérisé en ce que** le dispositif de distribution (1) présente le dispositif de transfert (15), qui permet d'effectuer un déplacement des objets (2) à la fois le long d'une direction de transport (3) depuis le dispositif de déchargement (10) jusqu'aux dispositifs de prélèvement (21, 22), ainsi que le long d'une direction de distribution (4) s'étendant essentiellement transversalement à la direction de transport (3).

6. Dispositif de distribution (1) selon l'une quelconque des revendications précédentes, **caractérisé en ce que** le nombre p des objets (2) d'un paquet (8) correspond à un nombre de cinq à cinquante, de préférence de douze, quatorze, seize ou dix-huit.

7. Dispositif de distribution (1) selon l'une quelconque des revendications précédentes, **caractérisé en ce que** le nombre m des objets (2) d'un groupe (5) correspond à un nombre de deux à vingt, de préférence cinq, six, huit ou dix.

8. Dispositif d'emballage pour former des emballages d'objets, comprenant un dispositif de distribution (1) selon l'une quelconque des revendications précédentes, dans lequel le nombre p des objets (2) d'un paquet (8) correspond au nombre des objets (2) d'un emballage d'objets.

9. Procédé pour distribuer des objets (2) depuis un dispositif de décharge (10) déchargeant les objets (2) pendant un temps de déchargement par groupes (5) de m objets (2), à un premier dispositif de prélèvement (21) et à un deuxième dispositif de prélèvement (22), **caractérisé en ce que** les dispositifs de prélèvement (21, 22) prélèvent les groupes (5) de m objets (2) en commun pendant un temps de prélèvement, et **en ce qu'**entre différents temps de prélèvement, les m objets (2) d'un groupe (5) sont divisés de manière variable en un premier nombre m₁ d'objets (2) déchargés au niveau du premier dispositif de prélèvement (21) et en un deuxième nombre m₂ d'objets déchargés (2) au niveau du deuxième dispositif de prélèvement (22).

10. Procédé selon la revendication 9, **caractérisé en ce que** pendant un cycle de prélèvement constitué de N temps de prélèvement, à chaque fois des paquets (8) de p objets (2) sont formés, le nombre des paquets (8) formés correspondant au produit du nombre des dispositifs de prélèvement (21, 22) par le nombre m d'objets (2) dans un groupe (5).

11. Procédé selon l'une quelconque des revendications 9 ou 10, **caractérisé en ce que** le nombre N des temps de prélèvement d'un cycle de prélèvement correspond au produit du nombre des dispositifs de prélèvement (21, 22) par le nombre p des objets (2) dans un paquet (8).

12. Procédé selon l'une quelconque des revendications 9 à 11, **caractérisé en ce que** le premier nombre m₁ des objets (2) déchargés au niveau du premier dispositif de prélèvement (21) et le deuxième nombre m₂ des objets (2) déchargés au niveau du deuxième dispositif de prélèvement (22), pendant un temps de prélèvement identique, est différent d'un nombre maximum de 1 à 3, de préférence de un au maximum.

13. Procédé selon l'une quelconque des revendications 9 à 12, **caractérisé en ce que** le nombre p des objets (2) d'un paquet (8) correspond à un nombre de cinq à cinquante, de préférence de douze, quatorze, seize ou dix-huit.

14. Procédé selon l'une quelconque des revendications 9 à 13, **caractérisé en ce que** le nombre m des objets (2) d'un groupe (5) correspond à un nombre de deux à vingt, de préférence cinq, six, huit ou dix.
